# EUROPEAN PATENT APPLICATION

(11) **EP 1 108 550 A1**
(43) Date of publication of application: **20.06.2001**
(21) Application number: 99940460.1
(22) Date of filing: 25.08.1999
(51) Int. Cl.: B41J 2/32, B41J 3/407

(54) **METHOD AND APPARATUS FOR THERMAL PRINTING**

(30) Priority: 28.08.1998 JP 24376498; 08.02.1999 JP 3052299
(71) Applicant: STAR MICRONICS CO., LTD., Shizuoka-shi, Shizuoka-ken 422-8654 (JP)
(72) Inventor: TSUKUDA, Yasunori, Shizuoka-shi Sizuoka 422-8654 (JP); NAGAI, Kenichi, Shizuoka-shi Sizuoka 422-8654 (JP); SAWAMOTO, Norihiro, Shizuoka-shi Sizuoka 422-8654 (JP)
(74) Representative: Kinsler, Maureen Catherine
(86) International application number: JP9904568
(87) International publication number: WO0012314

(57) **Abstract**

A rotary printer 10 is provided with a stepping motor 15 and a thermal head 11, etc. The stepping motor 15 rotates a disk print medium M about its axis, which disk print medium has a heat-sensitive coloring layer which is colored when thermal energy is applied. The thermal head 11 extends in the radial direction of the disk print medium M so as to be opposed to the medium M. The rotary printer 10 performs printing on the thermal record medium M by coloring a plurality of pixel areas of a surface of the thermal record medium M which are arranged in the circumferential and radial directions thereof by selectively supplying heat to the pixel areas. A small-size thermal printing apparatus capable of printing of high-quality images on the disk print medium can thus be realized.

## Description

### Technical Field

The present invention relates to a thermal printing apparatus and a thermal printing method for performing thermal printing on disk print media such as CD-Rs (compact diskrecordables) and rectangular print media such as cut paper and continuous paper.

### Background Art

CD-Rs are write-once optical disks onto which data can be recorded only once unlike disks such as read-only CDs and CD-ROMs (read only memories). Data recorded on CD-Rs can be reproduced by a reproducing apparatus for CD-Rs as well as CDs and CD-ROMs. Because of their inexpensiveness, easiness to handle and large recording capacity, CD-Rs are frequently used for software publication on a small scale of approximately 100 copies.

One surface of a CD or CD-ROM is used as a record surface for data-recording and data-reading, and the other surface is generally used as a print surface for printing a title or the like. Since CDs or CD-ROMs having the same design are generally published in large quantity, printing is performed by use of a large-size printer. Since CD-Rs are used for small-scale publication and private uses, a small-size and inexpensive printer is desired which is capable of easily producing and changing print contents for a small number of disks or for each disk.

Examples of such printers are described in Japanese Unexamined Patent Publications JP-A 5-238005 (1993) and JP-A 6-31906 (1994). In these information recorders, information is recorded onto a record surface of an optical disk through a pickup, while ink-jet printing is performed on the print surface. The printing the optical disk is performed while moving an ink-jet nozzle in the radial direction of the optical disk and rotating the optical disk.

Such information recorders are large-sized and complicated because the information recorders have an ink cartridge and a mechanism for supplying ink to an ink-jet head for an ink-jet printing method and as well a pickup for information recording. Moreover, since the ink-jet head and the pickup are provided in the same apparatus, information recording may be hindered for a reason such that ink scattering from the ink-jet head adheres to the pickup. Further, maintenance such as replacement of the ink cartridge and cleaning of parts around the ink-jet head takes time.

In addition, when the rotational speed of the optical disk varies, density variations, color shifts and the like are caused, so that the image quality is significantly degraded.

### Disclosure of Invention

An object of the invention is to provide a thermal printing apparatus and a thermal printing method enabling printing of high-quality images on a disk print medium by a method different from the above-described method.

Moreover, an object of the invention is to provide a thermal printing apparatus capable of realizing printing of high-quality images by suppressing variations in speed of the print medium.

The invention is a thermal printing apparatus comprising:
a thermal head for thermal printing in a main scanning direction along a radial direction of a disk print medium having a heat-sensitive coloring layer; and
rotating means for rotating the disk print medium in a sub scanning direction along a circumferential direction of the disk print medium,
wherein the thermal printing is performed on the disk print medium by selectively supplying heat to a plurality of pixel areas arranged in the radial and circumferential directions based on image data supplied from an external host apparatus.

According to the invention, since thermal printing is performed, printing of high-quality images with no blur can be realized. Since scanning is performed in the radial and circumferential directions of the disk print medium, the scanning method is suitable for the shape of the disk print medium, and printing of higher-quality images can be realized.

Moreover, since thermal printing is performed on the disk print medium previously provided with a heat-sensitive coloring layer, no equipment associated with ink is necessary for the thermal printing apparatus, so that a small-size and easy-to-maintain thermal printing apparatus can be realized. Further, since the rotating means can perform sub scanning in the circumferential direction only by rotating the disk print medium in the position where the disk print medium is situated, it is unnecessary to parallelly move the disk print medium and provide space for the movement, so that a smaller-size thermal printing apparatus can be realized.

Incidentally, by forming the heat-sensitive coloring layer of the disk print medium of only a single coloring layer having a predetermined coloring wavelength, monochrome printing can be performed. By forming the heat-sensitive coloring layer of the disk print medium of a plurality of coloring layers having different coloring wavelengths, color printing can be performed.

Moreover, the invention is a thermal printing apparatus comprising:
a thermal head for thermal printing in a main scanning direction along a radial direction of a disk print medium having a heat-sensitive coloring layer composed of three coloring layers having different heat-sensitive coloring levels and coloring wavelengths;
rotating means for rotating the disk print medium in a sub scanning direction along a circumferential direction of the disk print medium; and
two fixing light sources for fixing coloring layers lowest and second-lowest in heat-sensitive level, respectively,
wherein the fixing light sources are linear cathode tubes disposed opposite to a print surface of the disk print medium, at the both sides of a main scanning line of the thermal head, and
the thermal printing is performed on the disk print medium by selectively supplying heat to a plurality of pixel areas arranged in the radial and circumferential directions based on image data supplied from an external host apparatus.

According to the invention, since linear cathode tubes are disposed at the both sides of the main scanning line of the thermal head, the thermal printing by the thermal head is not prevented and compact disposition is realized, so that a small-size and inexpensive thermal printing apparatus can be realized.

Such configuration is suitable for full-color printing by coloring and fixing a first coloring layer, a second coloring layer and a third coloring layer sequentially.

Moreover, since inexpensive linear cathode tubes are used as the fixing light sources, an inexpensive thermal printing apparatus can be provided.

Further, in the invention, it is preferable that the heat-sensitive coloring layer is composed of a yellow coloring layer, a magenta coloring layer and a cyan coloring layer.

According to the invention, since coloring of yellow, magenta and cyan is possible on the disk print medium by the supply of heat from the thermal head, full-color printing can be performed with reliability.

The invention is a thermal printing apparatus comprising:
a thermal head for thermal recording in a main scanning direction along a radial direction of a disk print medium having a heat-sensitive coloring layer;
rotating means for rotating the disk print medium in a sub scanning direction along a circumferential direction of the disk print medium; and
a fixing light source for fixing an area of the heat-sensitive coloring layer which area has been recorded by the thermal head,
wherein a period of supplying power to the thermal head and a period of supplying power to the fixing light source overlap with each other.

According to the invention, since the period of supplying power to the thermal head and the period of supplying power to the fixing light source overlap with each other, a part of the recording step by the thermal head and a part of the fixing step by the fixing light source can be performed at the same time, so that a thermal printing apparatus with reduced printing time can be realized.

Moreover, the invention is a thermal printing method comprising the steps of:
rotating a disk print medium having a heat-sensitive coloring layer in a sub scanning direction along a circumferential direction of the disk print medium while supplying heat from a thermal head in a main scanning direction along a radial direction of the disk print medium, thereby performing thermal recording on the heat-sensitive coloring layer; and
applying light from a fixing light source to an area of the heat-sensitive coloring layer which area has been recorded by the thermal head, thereby performing fixing,
wherein a period of supplying power to the thermal head and a period of supplying power to the fixing light source overlap with each other.

According to the invention, by overlapping the period of supplying power to the thermal head and the period of supplying power to the fixing light source with each other as described above, the printing time can be reduced.

Moreover, the invention is a thermal printing method for thermal-recording a disk print medium having first to third coloring layers having different heat-sensitive coloring levels and coloring wavelengths in a main scanning direction along a radial direction of the disk print medium with heating values corresponding to the respective coloring layers while rotating the disk print medium in a sub scanning direction along a circumferential direction of the disk print medium, the method comprising the steps of:
a first recording step for thermal-recording the first coloring layer;
a first fixing step in which application of fixing light to an area of the first coloring layer which area has been thermal-recorded is started before completion of the first recording step;
a second recording step in which thermal recording the second coloring layer is started before completion of the first fixing step;
a second fixing step in which application of fixing light to an area of the second coloring layer which area has been thermal-recorded is started before completion of the second recording step; and
a third recording step in which thermal recording the third coloring layer is started before completion of the second fixing step.

According to the invention, as described above, by the scanning method suitable for thermal printing and the disk print medium, printing of high-quality images can be realized.

Such method is suitable for full-color printing by coloring and fixing a first coloring layer, a second coloring layer and a third coloring layer sequentially.

Moreover, by starting the first fixing step before completion of the first recording step, the first recording step and the first fixing step can be simultaneously performed only during a certain period. Likewise, the first fixing step and the second recording step can be simultaneously performed, the second recording step and the second fixing step can be simultaneously performed, and the second fixing step and the third recording step can be simultaneously performed. Accordingly, the printing time can be significantly reduced in full-color printing.

Moreover, the invention is a thermal printing apparatus comprising:
a thermal head for thermal printing in a main scanning direction along a radial direction of a disk print medium having a heat-sensitive coloring layer;
head pressing means for pressing the thermal head toward the disk print medium;
a rotary table for supporting the disk print medium and for rotating the disk print medium in a sub scanning direction along a circumferential direction of the disk print medium; and a friction member being in contact with the rotary table to apply a frictional load to the rotation.

According to the invention, by the friction member which is in contact with the rotary table to apply a frictional load Lb to the rotation, the ratio of variations ΔLa in the frictional load La between the thermal head and the disk print medium decreases from ΔLa/La to ΔLa/(La+Lb). Although the motor torque necessary for driving the rotary table increases in response to the frictional load, variations in the rotational speed of the disk print medium can be suppressed, so that high-quality images with few density variations and color shifts can be printed.

Moreover, the invention is a thermal printing apparatus comprising:
a thermal head for thermal printing in a main scanning direction along a width of a rectangular print medium having a heat-sensitive coloring layer;
head pressing means for pressing the thermal head toward the rectangular print medium;
a movable table for supporting the rectangular print medium and for moving the rectangular print medium in a sub scanning direction perpendicular to the main scanning direction; and
a friction member being in contact with the movable table to apply a frictional load to the rectilinear movement.

According to the invention, by the friction member which is in contact with the movable table and applying a frictional load Lb to the rectilinear movement, the ratio of variations ΔLa in the frictional load La between the thermal head and the rectangular print medium decreases from ΔLa/La to ΔLa/(La+Lb). Although the motor torque necessary for driving the movable table increases in response to the frictional load, variations in the speed of the rectangular print medium can be suppressed, so that high-quality images with few density variations and color shifts can be printed.

Further, in the invention, it is preferable that the friction member is disposed so as to oppose the pressure by the head.

According to the invention, in the thermal recording method using the thermal head, since it is necessary that the thermal head and the print medium are uniformly in contact, a predetermined pressure is applied by the head pressing means. By disposing the friction member so as to oppose the pressure by the head, the friction member can be used also as a receiving member such as a backup roller, so that the number of parts can be prevented from increasing.

### Brief Description of Drawings

FIG. 1 is a schematic perspective view showing a rotary printer 10 according to an embodiment of the invention.

FIG. 2A is a cross-sectional view showing the structure of a heat-sensitive print sheet 21 used as a disk print medium M of FIG. 1.

FIG. 2B is a cross-sectional view showing the structure of a medium 19 in which the heat-sensitive print sheet 21 is pasted to an optical disk 20.

FIG. 3 is a side view showing the mechanical structure of the rotary printer 10 of FIG. 1 in detail.

FIG. 4 is a plan view of the rotary printer 10 with a housing 33 of FIG. 3 being closed.

FIG. 5 is a side view of the rotary printer 10 with the housing 33 of FIG. 3 being closed.

FIG. 6 is a block diagram showing the electrical structure of the rotary printer 10 of FIG. 1.

FIG. 7 is a timing chart showing the operation of the rotary printer 10.

FIGs. 8A to 8F are views stepwisely showing the print condition of the disk print medium M.

FIG. 9A is a plan view showing a mechanism to apply a frictional load to a turntable 31 and FIG. 9B is a central cross-sectional view thereof.

FIG. 10 is a view showing an example in which friction members 160 are symmetrically disposed.

FIG. 11 is a graph illustrating variations in the medium speed in a case where the friction members 160 and 161 are not used.

FIG. 12 is a graph illustrating variations in the medium speed in a case where the friction members 160 and 161 are used.

FIG. 13A is a plan view showing a printer in which a print medium is parallellymoved, and FIG. 13B is a front view thereof.

### Best Mode for Carrying out the Invention

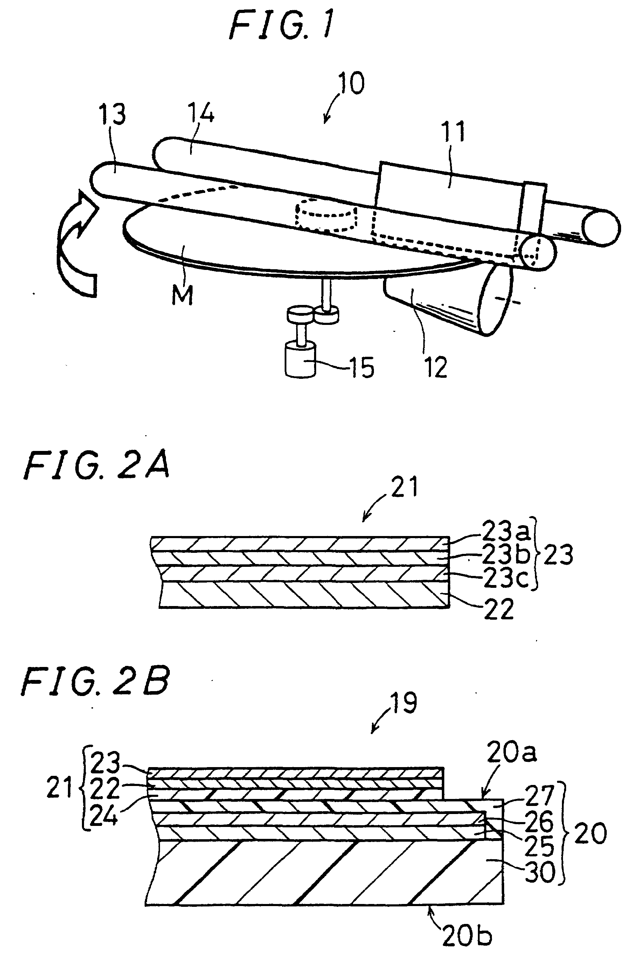

FIG. 1 is a schematic perspective view showing a rotary printer 10 according to an embodiment of the invention. The rotary printer 10 comprises a thermal head 11, a backup roller 12 and cathode tubes 13 and 14, for printing on a disk print medium M. The disk print medium M is a disk-shaped print medium having heat-sensitive coloring layers which are colored when heat is applied. The thermal head 11 is a line thermal head extending in the radial direction of the disk print medium M. A stepping motor 15 rotates the disk print medium M about its axis. The backup roller 12, whose surface is covered with rubber, supports the disk print medium M from its rear surface against the pressure to its top surface by the thermal head 11, and rotates as the disk print medium M rotates. The cathode tubes 13 and 14 emit ultraviolet rays of wavelengths at which the coloring layers of the disk print medium M are fixed.

Printing of the rotary printer 10, in which the radial direction of the disk print medium M is the main scanning direction and the circumferential direction of the disk print medium M is the sub scanning direction, is carried out by selectively supplying heat to pixel areas arranged in the radial and circumferential directions of the disk print medium M to color them.

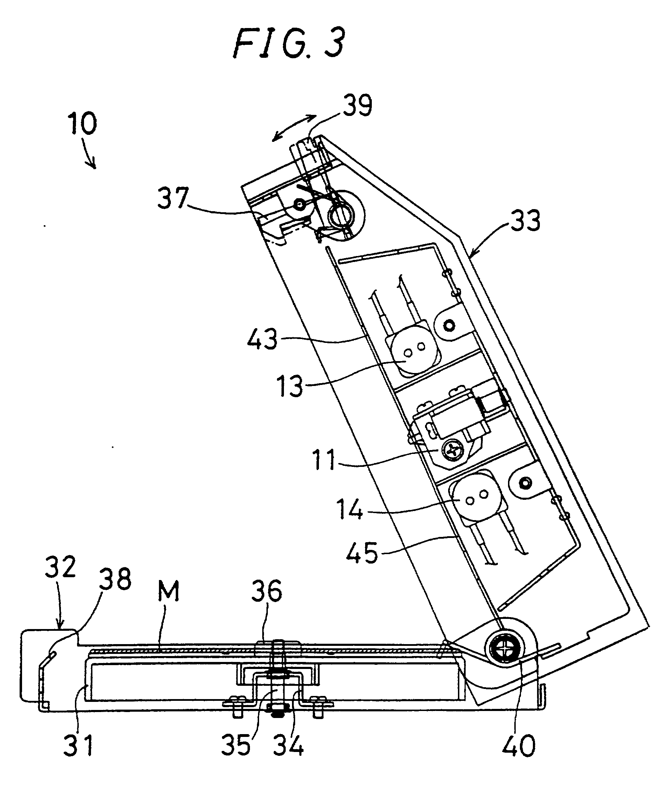

The thermal head 11 as shown in FIG. 1 may be a serial head capable of scanning in the radial direction of the disk print medium M. Moreover, a turntable 31 as shown in FIG. 3 and described later may be used in place of the backup roller 12 as shown in FIG. 1. Hereinafter, description will be continued on the assumption that the turntable 31 is used.

FIG. 2A is a cross-sectional view showing the structure of a heat-sensitive print sheet 21 used as the disk print medium M as shown in FIG. 1. FIG. 2B is a cross-sectional view showing the structure of a medium 19 in which the heat-sensitive print sheet 21 is pasted on an optical disk 20.

The heat-sensitive print sheet 21 as shown in FIG. 2A has a cross-sectional structure similar to those of multicolor heat-sensitive record sheets described in Japanese Unexamined Patent Publications JP-A 3-43293 (1991) and JP-A 5-69566 (1993). The printing method of coloring a multicolor heat-sensitive record sheet by applying heat to the sheet is called a TA (thermo-auto chrome) method. The rotary printer 10 of this embodiment is also a TA printer.

In the heat-sensitive print sheet 21, a heat-sensitive coloring layer 23 is formed on the surface of a base material 22 such as paper, and the plane shape of the sheet 21 is a disk shape. The heat-sensitive coloring layer 23 is composed of a yellow coloring layer 23a, a magenta coloring layer 23b and a cyan coloring layer 23c.

The yellow coloring layer 23a contains a yellow pigment material encapsulated in microcapsules and a coupler. By applying thermal energy of 20 mJ/mm² or more, the pigment material passes through the microcapsules to react with the coupler, so that the layer 23a is colored. Moreover, by applying ultraviolet rays of a wavelength of 420 nm to the yellow coloring layer 23a, the unreacted yellow pigment material is decomposed, so that coloring does not continue any more.

The magenta coloring layer 23b contains a magenta pigment material encapsulated in microcapsules and a coupler. By applying thermal energy of not less than 40 mJ/mm², the pigment material passes through the microcapsules to react with the coupler, so that the layer 23b is colored. Moreover, by applying ultraviolet rays of a wavelength of 365 nm to the magenta coloring layer 23b, the unreacted magenta pigment material is decomposed, so that coloring does not progress any more.

The cyan coloring layer 23c contains a dye encapsulated in microcapsules, and is colored by applying thermal energy of approximately 80 mJ/mm² or more.

The thermal head 11 as shown in FIG. 1 is capable of supplying any of thermal energy of 20 mJ/mm² to 40 mJ/mm², thermal energy of 40 mJ/mm² to 80 mJ/mm² and thermal energy of 80 mJ/mm² to 120 mJ/mm². The cathode tube 13 emits ultraviolet rays of a wavelength of 420 nm to fix the yellow coloring layer 23a. The cathode tube 14 emits ultraviolet rays of a wavelength of 365 nm to fix the magenta coloring layer 23b.

In the medium 19 as shown in FIG. 2B, the heat-sensitive print sheet 21 is pasted on the print surface 20a of the optical disk 20 such as a CD-R with an adhesive layer 24 in between.

In the optical disk 20, an organic pigment layer 25, a reflective layer 26 made of metal and a protective layer 27 are laminated in this order on a polycarbonate substrate 30. For the optical disk 20, data recording is performed by phase-changing the organic pigment layer 25 by applying a laser beam from the record surface 20b. The optical disk 20 usable for the rotary printer 10 is not limited to a disk having such a structure, but may be, for example, a CD, CD-ROM or CD-RW (rewritable). Moreover, the optical disk 20 may be a DVD (digital video disk) -ROM, DVD-RAM (random access memory), DVD-R, DVD-RW or the like.

As the disk print medium M, the heat-sensitive print sheet 21 as shown in FIG. 2A may be used as it is, or the medium 19 as shown in FIG. 2B may be used. When the heat-sensitive print sheet 21 is used, the heat-sensitive print sheet 21 can be pasted on the optical disk 20 after printing. Moreover, the heat-sensitive coloring layer 23 may be directly formed on the optical disk 20 by vapor deposition or the like.

FIG. 3 is a side view showing the mechanical structure of the rotary printer 10 as shown in FIG. 1 in detail. Parts the same as those as shown in FIG. 1 are designated by the same reference numerals. The rotary printer 10 as shown in FIG. 3 has a so-called clamshell structure. The rotary printer 10 comprises a housing 32 accommodating parts such as the turntable 31 and a housing 33 accommodating parts such as the thermal head 11 and the cathode tubes 13 and 14. Since the thermal head 11 and the turntable 31 are far apart from each other when the housing 32 and the housing 33 are opened as shown in FIG. 3, the disk print medium M is easily set. The housing 33 is pivotably supported at an end thereof by an end of the housing 32 so as to be openable and closable with respect to the housing 32. A torsion coil spring 40 is provided so as to abut on both the end of the housing 32 and the end of the housing 33, and the housing 33 is urged in an open direction with respect to the housing 32.

At the end opposite to the pivotably supported end of the housing 33 is provided a lever 37, and a stopper 38 is provided at the end opposite to the pivotably supported end of the housing 32. A claw is formed at an end of the lever 37. When the housing 33 is pivoted down in the closing direction, the end of the lever 37 abuts on the stopper 38. When the housing 33 is further pivoted down, the lever 37 is pushed up by the stopper 38, so that the end of the lever 37 is fitted into a through hole formed in the stopper 38. Consequently, the housing 33 is latched to the housing 32. Moreover, the lever 37 has a grip 39 which moves in response to the movement of the lever 37. By pulling up the grip portion 39, the end of the lever 37 is pulled out of the through hole of the stopper 38 to open the housing 33 again.

A convex auxiliary member 34 is screwed to the bottom of the housing 32. The bottom of the housing 32 and the convex portion of the auxiliary member 34 are a predetermined distance away from each other, and rotatably support a shaft member 35. The shaft member 35 is rotated by the stepping motor 15. The turntable 31 is fixed to the shaft member 35 and rotates together with the shaft member 35. The disk print medium M is placed on the turntable 31 for printing. In the center of the turntable 31, a circular protrusion 36 protruding upward is formed. The protrusion 36 is fitted into a through hole formed in the center of the optical disk 30, thereby realizing centering the optical disk 30.

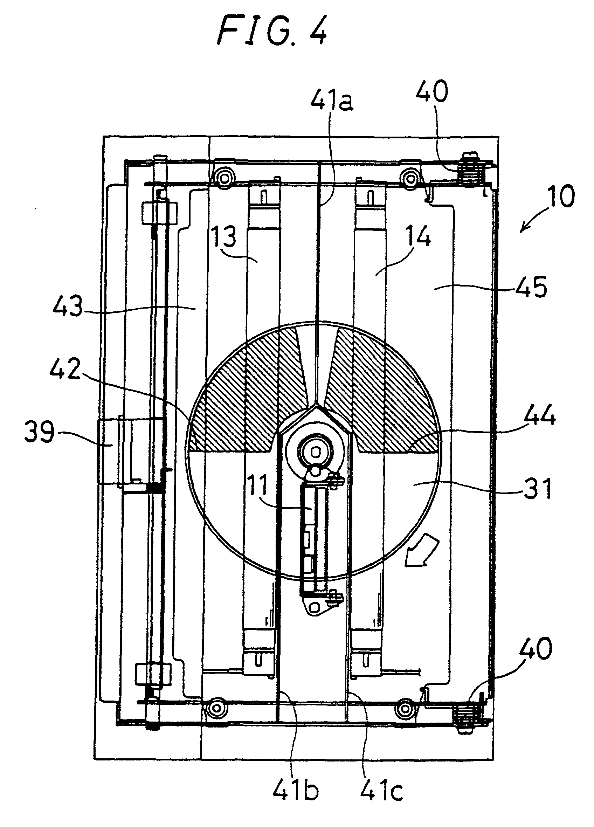

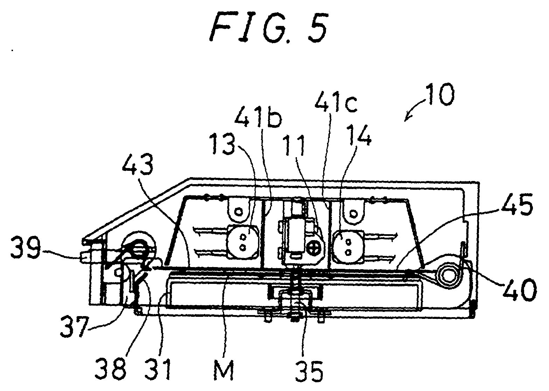

FIG. 4 is a plan view of the rotary printer 10 with the housing 33 of FIG. 3 being closed. FIG. 5 is a side view of FIG. 4. The housing 33 accommodating parts such as the thermal head 11 and the cathode tubes 13 and 14. These parts are disposed so as to be opposed to the disk print medium M on the turntable 31 when the housing 33 is closed. The thermal head 11 and the cathode tubes 13 and 14 have linearly extending shapes. The housings 32 and 33 both have rectangular plane shapes, and the thermal head 11 and the cathode tubes 13 and 14 are disposed in parallel to the long sides of the housing 33. The cathode tubes 13 and 14 are disposed at the both sides of the thermal head 11.

In cathode tubes, the light quantity is generally smaller in end parts than in a central part. The end parts where the light quantity is smaller are parts extending approximately 5 cm from the ends. For this reason, it is desirable to use cathode tubes 13 and 14 which are sufficiently long compared to the radius or diameter of the disk print medium M and to dispose the cathode tubes 13 and 14 so that the central parts thereof are opposed to the disk print medium M. By doing this, light from the cathode tubes 13 and 14 can be efficiently applied to the disk print medium M, so that the heat-sensitive coloring layer 23 can be efficiently fixed.

Although, ideally, it is desirable that the cathode tubes 13 and 14 be disposed in the radial direction of the disk print medium M, the cathode tubes 13 and 14 cannot be disposed in that way because of the configuration of the cathode tubes 13 and 14, decrease in light quantity in the end parts, disposition of the thermal head 11 and the like. Therefore, by disposing the cathode tubes 13 and 14 at the both sides of the thermal head 11 as described above, the thermal printing by the thermal head 11 is not prevented by the cathode tubes 13 and 14. Further, by disposing the cathode tubes 13 and 14 as close to the thermal head 11 as possible, light from the cathode tubes 13 and 14 can be efficiently applied to the disk print medium M.

Between the cathode tube 13 and the cathode tube 14 is provided a light intercepting plate 41a. A light intercepting plate 41b is provided between the thermal head 11 and the cathode tube 13 to prevent the pixel areas to be colored by the thermal head 11 from being fixed by the cathode tube 13. Further, between the thermal head 11 and the cathode tube 14 is provided a light intercepting plate 41c to prevent the pixel areas to be colored by the thermal head 11 from being fixed by the cathode tube 14.

Between the cathode tube 13 and the disk print medium M is provided a light intercepting plate 43 having an opening 42, and a light intercepting plate 45 having an opening 44 is provided between the cathode tube 14 and the disk print medium M. The disk print medium M is irradiated with light from the cathode tube 13 having passed through the opening 42 and with light from the cathode tube 14 having passed through the opening 44.

Since the light intercepting plates 43 and 45 are slightly away from the disk print medium M when the housing 33 is closed, the light through the openings 42 and 44 is applied to the disk print medium M in areas slightly wider than the areas of the openings 42 and 44. Therefore, it is necessary to select the configuration and disposition of the openings 42 and 44 so that the light through the openings 42 and 44 is not applied to the print area of the thermal head 11 as well as the light quantity necessary for fixing is obtained.

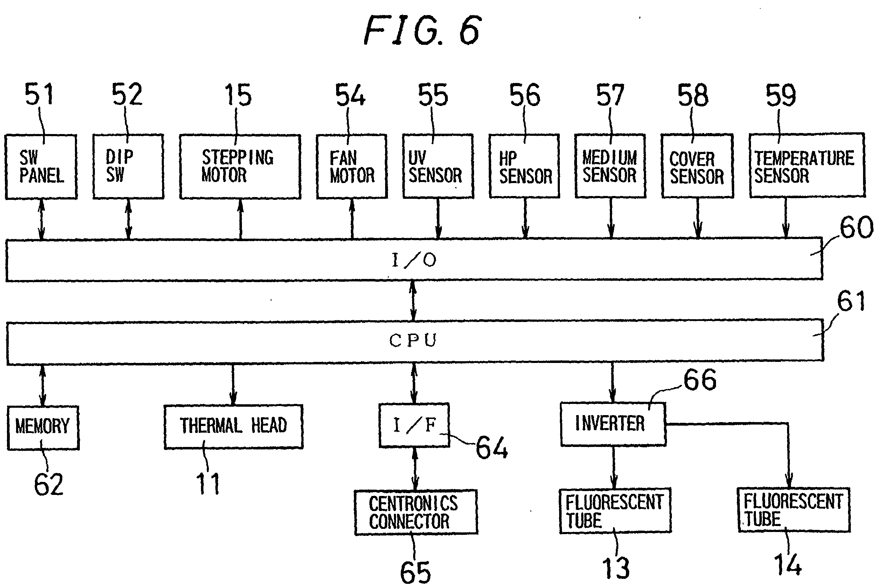

FIG. 6 is a block diagram showing the electrical structure of the rotary printer 10 as shown in FIG. 1. A switch panel 51 comprises a switch for switching the connection of an I/F 64 and a panel for displaying the connection condition. A DIP switch 52 changes initial settings such as the transfer speed of a Centronics connector 65 and the print density of the thermal head 11. A fan motor 54 provided in the housing 32 or housing 33 drives a fan for interior and exterior ventilation.

Ultraviolet sensors 55 are photodiodes for detecting ultraviolet rays from the cathode tubes 13 and 14. An HP sensor 56 detects the home position of the turntable 31. A medium sensor 57 detects the disk print medium M placed on the turntable 31. A cover sensor 58 detects the housing 32 being closed with respect to the housing 33. A temperature sensor 59 detects the temperature of the thermal head 11. An I/O (input/output) circuit 60 performs input from switches and sensors to a CPU 61 and output from the CPU 61 to switches and motors.

The CPU (central processing unit) 61 controls the I/O circuit 60, the thermal head 11, the I/F 64 and an inverter 66. In a memory 62, data is temporarily stored for calculation by the CPU 61 or data transfer. The I/F 64 bidirectionally transmits data between the Centronics connector 65 and an external personal computer or the like. The inverter 66 supplies electric power to the cathode tubes 13 and 14 and adjusts the electric power.

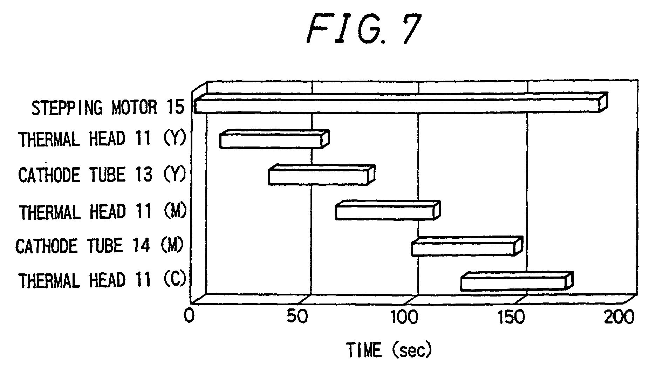

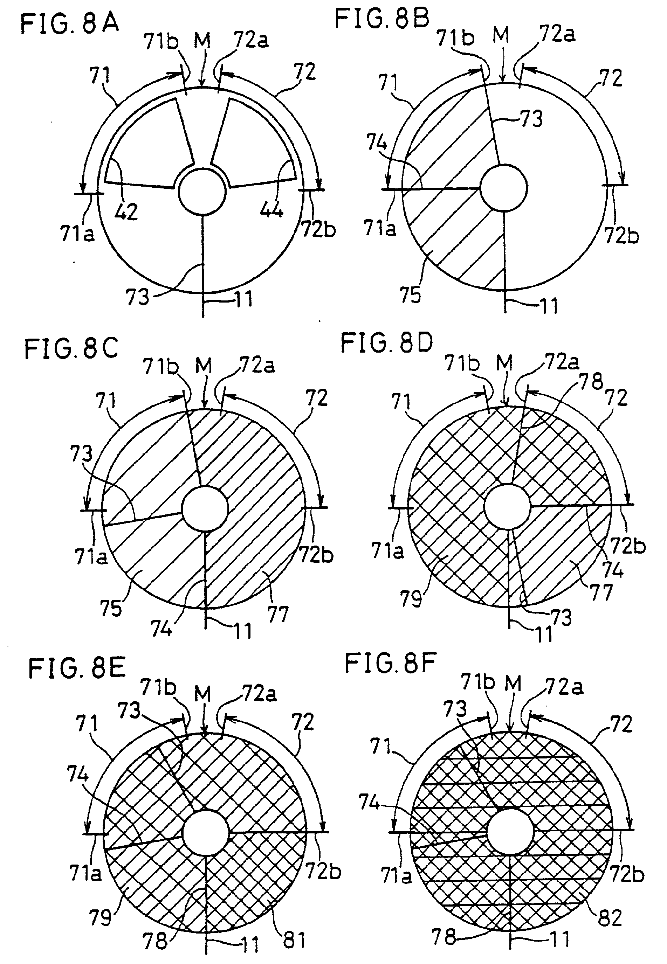

FIG. 7 is a timing chart showing the operation of the rotary printer 10. FIGs. 8A to 8F are views stepwisely showing the print condition of the disk print medium M. When printing is started, the data of a print image previously produced by a personal computer is transmitted to the thermal head 11 through the I/F 64, the CPU 61 and the like. At the same time, power supply to the stepping motor 15 is started, so that the stepping motor 15 rotates the turntable 31 at predetermined rotation speed.

In succession to the start of rotation of the stepping motor 15, in FIG. 8A, power supply to the thermal head 11 is started, and thermal energy of the lowest heat-sensitive coloring level is applied to the disk print medium M. Consequently, the yellow coloring layer 23a is colored.

Then, as shown in FIG. 8B, when a forefront line 73 of a colored area 75 where the yellow coloring layer 23a is colored reaches a rearmost part 71b of a light irradiated area 71, power supply to the cathode tube 13 is started. Consequently, light from the cathode tube 13 is applied to the disk print medium M. The light irradiated area 71 is an area irradiated with light from the cathode tube 13. Then, when the forefront line 73 makes one revolution to reach the thermal head 11 again, power supply to the thermal head 11 is stopped to end coloring of the yellow coloring layer 23a.

Then, as shown in FIG. 8C, when a forefront line 74 of a fixed area 77 where fixing of the yellow coloring layer 23a is completed reaches the thermal head 11, power supply to the thermal head 11 is started, and thermal energy of the second lowest heat-sensitive coloring level is applied to the disk print medium M. Consequently, coloring of the magenta coloring layer 23b is started from the forefront line 74. Then, when the forefront line 73 again reaches the rearmost part 71b, power supply to the cathode tube 13 is stopped to end fixing of the yellow coloring layer 23a.

Then, as shown in FIG. 8D, when the forefront line 74 of a colored area 79 where the magenta coloring layer 23b is colored reaches a rearmost part 72b of a light irradiated area 72, power supply to the cathode tube 14 is started. Consequently, light from the cathode tube 14 is applied to the disk print medium M, so that the magenta coloring layer 23b is fixed. The light irradiated area 72 is an area irradiated with light from the cathode tube 14. Then, when the forefront line 74 reaches the thermal head 11, power supply to the thermal head 11 is stopped to end coloring of the magenta coloring layer 23b.

Then, as shown in FIG. 8E, when a forefront line 78 of a fixed area 81 where fixing of the magenta coloring layer 23b is completed reaches the thermal head 11, power supply to the thermal head 11 is started, and thermal energy of the highest heat-sensitive coloring level is applied to the disk print medium M. Consequently, coloring of the cyan coloring layer 23c is started from the forefront line 78. Then, when the forefront line 78 again reaches the rearmost part 72b of the light irradiated area 72, power supply to the cathode tube 14 is stopped to end fixing of the magenta coloring layer 23b.

Then, as shown in FIG. 8F, when the forefront line 78 reaches the thermal head 11, power supply to the thermal head 11 is stopped to end coloring of the cyan coloring layer 23c. At this time, the disk print medium M is all covered with a colored area 82 where the cyan coloring layer 23c is colored, and printing is completed.

By successively performing coloring and fixing of the yellow coloring layer 23a, coloring and fixing of the magenta coloring layer 23b and coloring of the cyan coloring layer 23c as described above, full-color printing can be performed.

Moreover, as shown in FIG. 8A, the heat applied area of the disk print medium M opposed to the thermal head 11 is not included in the light irradiated area 71 of the disk print medium M opposed to the cathode tube 13 but is away therefrom. By the heat applied area being away from the light irradiated area 71, even before the colored area 75 makes one revolution to again reach the thermal head 11, the yellow fixing step can be started when the colored area 75 reaches the light irradiated area 71. Therefore, as shown in FIG. 7, the yellow fixing step can be started in the middle of the yellow coloring step, and the magenta coloring step can be started in the middle of the yellow fixing step.

Likewise, by the area to which heat is applied by the thermal head 11 not being included in the area 72 irradiated with light from the cathode tube 14 but being away therefrom, the magenta fixing step can be started in the middle of the magenta coloring step, and the cyan coloring step can be started in the middle of the magenta fixing step. Since the coloring step and the fixing step can be performed at the same time as described above, the printing time can be significantly reduced.

The coloring step of another color is not performed after the cyan coloring step, and fixing of the cyan coloring layer 23c is unnecessary. For this reason, as described with reference to FIG. 2, the cyan coloring layer 23c may be a dye encapsulated in microcapsules so that fixing by light is unnecessary. Further, as shown in FIG. 1, etc., only the cathode tube 13 for fixing the yellow coloring layer 23a and the cathode tube 14 for fixing the magenta coloring layer 23b are necessary for the rotary printer 10.

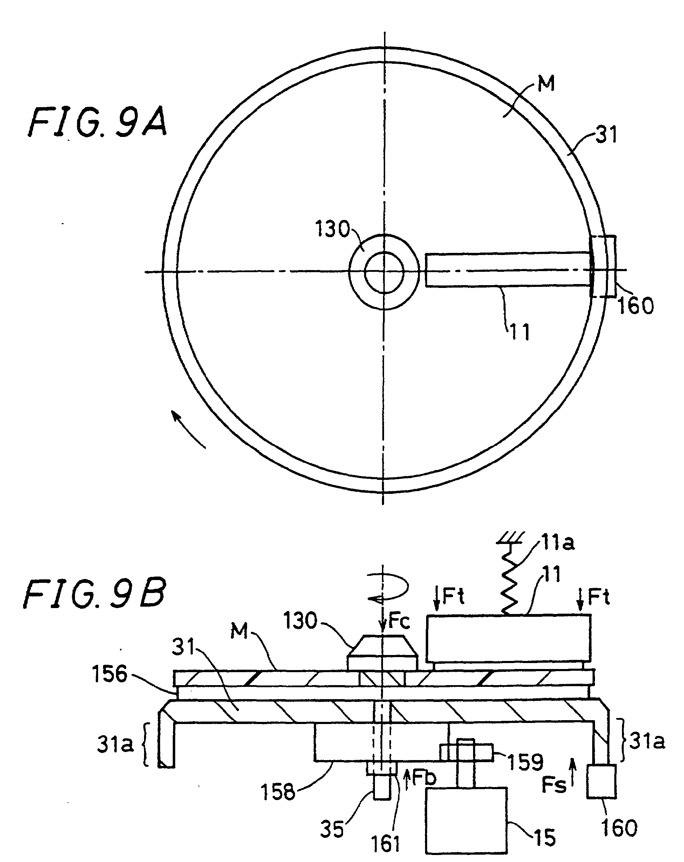

FIG. 9 is a structural view showing a mechanism to apply a frictional load to the turntable 31; FIG. 9A is a plan view and FIG. 9B is a central cross-sectional view. The disk print medium M is placed on the turntable 31 having a diameter equal to or larger than the outside diameter of the medium M. In the center of the turntable 31, an engagement protrusion having an outside diameter substantially the same as the diameter of the central hole of the disk print medium M is provided for centering the disk print medium M. On the turntable 31, a rubber sheet 156 for improvement in the force of grip with the medium M, suppression of vibrations and leveling of a pressure Ft is placed. The disk print medium M is supported between the turntable 31 and a clamp 130 by a pressure Fc. The turntable 31 is rotatably supported by a shaft member 35 so as to oppose the pressure Fc, and is driven by the motor 15 through gears 158 and 159.

The thermal head 11 is disposed in the radial direction of the disk print medium M, and is pressed toward the disk print medium M at the pressure Ft by a spring 11a attached to the apparatus cover.

On the periphery of the turntable 31, a cylindrical portion 31a extending in parallel to the direction of the axis of rotation is formed, and a friction member 160 is provided so as to be in contact with the end surface of the cylindrical portion 31a to apply a frictional load to the rotation. The friction member 160 provided on the periphery can produce high torque in spite of its small size. Further, between the shaft member 35 and the gear 158 is also provided a friction member 161 in order to apply a frictional load by contact.

The friction members 160 and 161 are made of a material such as a synthetic resin, e.g. polyacetal, and sintered metal, that is, a material which has a capability enough to apply a sufficient frictional load and realize smooth sliding with respect to the rotation of the turntable 31.

The friction member 161 supports the turntable 31 with a supporting force Fb against the pressure Fc by the clamp 130. The friction member 160 supports the turntable 31 with the resultant of the supporting force Fb and a supporting force Fs against the pressure Ft by the thermal head 11. By such force balance, surface tilt of the turntable 31 can be prevented, so that uniform contact between the thermal head 11 and the disk print medium M can be maintained.

By applying a frictional load by use of the friction members 160 and 161 as described above, variations in the frictional load between the thermal head 11 and the disk print medium M are reduced, so that variations in the rotational speed of the disk print medium M can be suppressed. Moreover, by using the turntable 31 having a large diameter, the moment of inertia can be increased to reduce variations in the rotational speed.

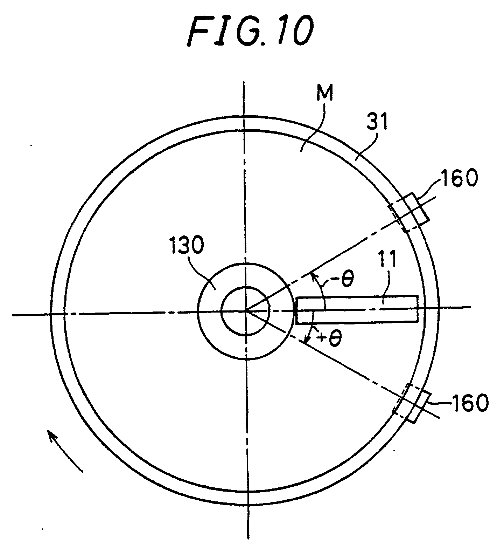

While FIG. 9 shows an example in which a single friction member 160 is disposed directly below the thermal head 11, a plurality of friction members 160 may be disposed symmetrical with respect to the thermal head 11 as shown in FIG. 10.

FIG. 10 is a view showing an example in which the friction members 160 are symmetrically disposed. The two friction members 160 are disposed in positions rotated by a predetermined rotational angle ± *θ* from the position opposed to the thermal head 11. Since tilt and deformation of the turntable 31 can be prevented by this disposition, stable sliding is enabled, so that the turntable 31 can be smoothly rotated.

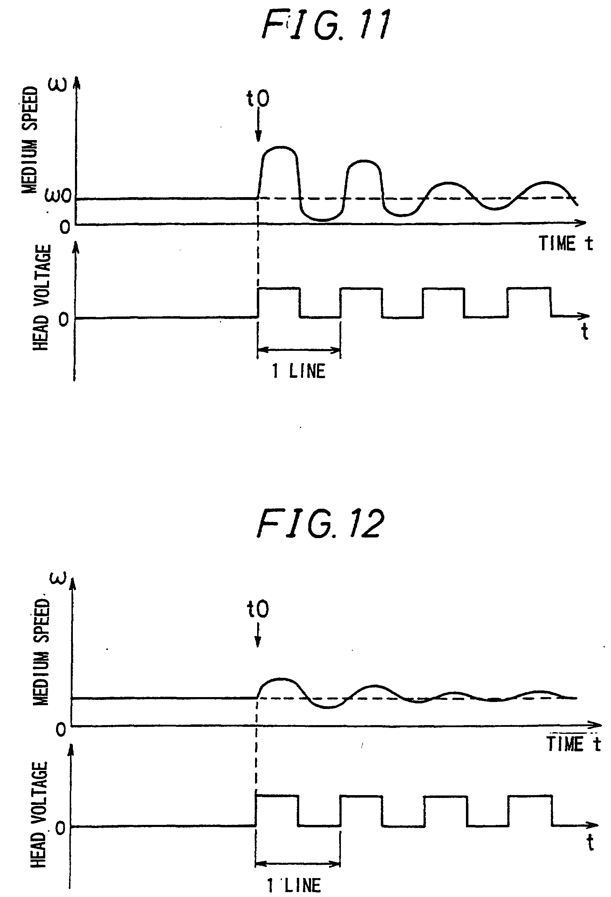

FIG. 11 is a graph illustrating variations in the medium speed in a case where the friction members 160 and 161 are not used. FIG. 12 is a graph illustrating variations in the medium speed in a case where the friction members 160 and 161 are used. Referring first to FIG. 11, when power supply to the thermal head 11 is started at a time t0 and thermal printing is performed line by line by PWM (pulse width modulation) control, a ringing phenomenon is observed in which the rotational speed ω of the disk print medium M increases during the head-on period and decreases during the head-off period. It is considered that this is because the friction between the thermal head 11 and the disk print medium M abruptly decreases due to heating of the thermal head 11 to transiently increase the rotational speed ω and thereafter, the frictional force abruptly returns because of powering off of the thermal head 11 to transiently decrease the rotational speed ω.

Referring next to FIG. 12, it is apparent that the ringing phenomenon of the medium speed as shown in FIG. 11 is significantly suppressed even when the thermal head 11 is driven by PWM control from the time t0, because a frictional load is applied by the friction members 160 and 161.

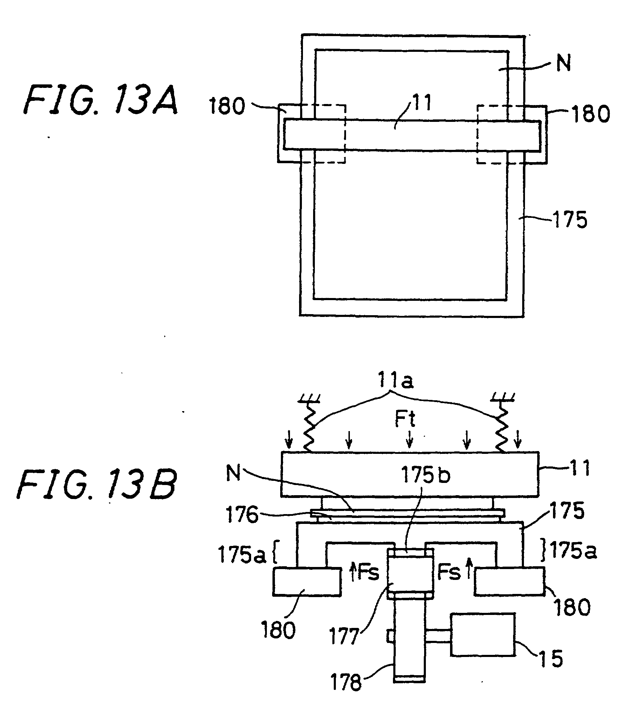

FIG. 13 is a structural view showing a printer in which the print medium is parallelly moved. FIG. 13A is a plan view. FIG. 13B is a front view. A rectangular print medium N is placed on a movable table 175 having a length equal to or larger than the length of the medium N. On the movable table 175, a rubber sheet 176 for improvement in the force of grip with the medium N, suppression of vibrations and leveling of the pressure Ft is placed. The movable table 175 is rectilinearly movably supported by a rectilinear guide (not shown). In the center of the rear surface, a rack 175b is formed, and the movable table 175 is conveyed by the motor 15 through gears 177 and 178.

The thermal head 11 is disposed in the direction of width of the rectangular print medium N, and is pressed toward the rectangular print medium N at the pressure Ft by the spring 11a attached to the apparatus body.

On either side of the movable table 175, a rib 175a extending downward is formed in the conveyance direction, and a friction member 180 is provided which is in contact with the end surface of each rib 175a to apply a frictional load to the rectilinear movement.

The friction member 180 is made of a material such as a synthetic resin, e.g. polyacetal, and sintered metal, that is, a material which has a capability enough to apply a sufficient frictional load and realize smooth sliding with respect to the rectilinear movement of the movable table 175.

The friction member 180 supports the movable table 175 with the supporting force Fs against the pressure Ft by the thermal head 11. By such force balance, surface tilt of the movable table 175 can be prevented, so that uniform contact between the thermal head 11 and the rectangular print medium N can be maintained.

By applying a frictional load by use of the friction member 180 as described above, variations in the frictional load between the thermal head 11 and the rectangular print medium N are reduced, so that variations in the rotational speed of the rectangular print medium N can be suppressed.

While FIG. 13 shows an example in which a single friction member 180 is disposed directly below the thermal head 11, a plurality of friction members 180 may be disposed symmetrical with respect to the thermal head 11.

### Effect of the Invention

As described above, according to the invention, by rotating the disk print medium by the rotating means and performing thermal printing by the thermal head, a small-size thermal printing apparatus capable of printing of high-quality images can be realized.

Moreover, by disposing the two fixing light sources which are linear cathode tubes at the both sides of the thermal head, these tubes can be compactly disposed to realize a small-size and inexpensive thermal printing apparatus.

Moreover, by forming the heat-sensitive coloring layer of the yellow coloring layer, the magenta coloring layer and the cyan coloring layer, full-color printing can be performed with reliability.

Moreover, by the period of supplying power to the thermal head and the power supplied periods of the fixing light sources overlapping with each other, the printing time can be reduced.

Moreover, by starting the first fixing step before completion of the first recording step, staring the second recording step before completion of the first fixing step, starting the second fixing step before completion of the second recording step and starting the third recording step before completion of the second fixing step, the printing time can be significantly reduced in full-color printing.

Moreover, by the friction member being in contact with the table conveying the print medium in the sub scanning direction to apply a frictional load to the conveyance of the medium, variations in the frictional load between the thermal head and the print medium can be reduced. Consequently, variations in the print medium speed can be suppressed, so that high-quality images with few density variations and color shifts can be printed.

Moreover, by disposing the friction member so as to oppose the pressure by the head, the friction member can be used also as a receiving member such as a backup roller, so that the number of parts can be prevented from increasing.

## Claims

1. A thermal printing apparatus comprising:
a thermal head for thermal printing in a main scanning direction along a radial direction of a disk print medium having a heat-sensitive coloring layer; and
rotating means for rotating the disk print medium in a sub scanning direction along a circumferential direction of the disk print medium,
wherein the thermal printing is performed on the disk print medium by selectively supplying heat to a plurality of pixel areas arranged in the radial and circumferential directions based on image data supplied from an external host apparatus.

2. A thermal printing apparatus comprising:
a thermal head for thermal printing in a main scanning direction along a radial direction of a disk print medium having a heat-sensitive coloring layer composed of three coloring layers having different heat-sensitive coloring levels and coloring wavelengths;
rotating means for rotating the disk print medium in a sub scanning direction along a circumferential direction of the disk print medium; and
two fixing light sources for fixing coloring layers lowest and second-lowest in heat-sensitive level, respectively,
wherein the fixing light sources are linear cathode tubes disposed opposite to a print surface of the disk print medium, at the both sides of a main scanning line of the thermal head, and
the thermal printing is performed on the disk print medium by selectively supplying heat to a plurality of pixel areas arranged in the radial and circumferential directions based on image data supplied from an external host apparatus.

3. The thermal printing apparatus of claim 2, wherein the heat-sensitive coloring layer is composed of a yellow coloring layer, a magenta coloring layer and a cyan coloring layer.

4. A thermal printing apparatus comprising:
a thermal head for thermal recording in a main scanning direction along a radial direction of a disk print medium having a heat-sensitive coloring layer;
rotating means for rotating the disk print medium in a sub scanning direction along a circumferential direction of the disk print medium; and
a fixing light source for fixing an area of the heat-sensitive coloring layer which area has been recorded by the thermal head,
wherein a period of supplying power to the thermal head and a period of supplying power to the fixing light source overlap with each other.

5. A thermal printing method comprising the steps of:
rotating a disk print medium having a heat-sensitive coloring layer in a sub scanning direction along a circumferential direction of the disk print medium while supplying heat from a thermal head in a main scanning direction along a radial direction of the disk print medium, thereby performing thermal recording on the heat-sensitive coloring layer; and
applying light from a fixing light source to an area of the heat-sensitive coloring layer which area has been recorded by the thermal head, thereby performing fixing,
wherein a period of supplying power to the thermal head and a period of supplying power to the fixing light source overlap with each other.

6. A thermal printing method for thermal-recording a disk print medium having first to third coloring layers having different heat-sensitive coloring levels and coloring wavelengths in a main scanning direction along a radial direction of the disk print medium with heating values corresponding to the respective coloring layers while rotating the disk print medium in a sub scanning direction along a circumferential direction of the disk print medium, the method comprising the steps of:
a first recording step for thermal-recording the first coloring layer;
a first fixing step in which application of fixing light to an area of the first coloring layer which area has been thermal-recorded is started before completion of the first recording step;
a second recording step in which thermal recording the second coloring layer is started before completion of the first fixing step;
a second fixing step in which application of fixing light to an area of the second coloring layer which area has been thermal-recorded is started before completion of the second recording step; and
a third recording step in which thermal recording the third coloring layer is started before completion of the second fixing step.

7. A thermal printing apparatus comprising:
a thermal head for thermal printing in a main scanning direction along a radial direction of a disk print medium having a heat-sensitive coloring layer;
head pressing means for pressing the thermal head toward the disk print medium;
a rotary table for supporting the disk print medium and for rotating the disk print medium in a sub scanning direction along a circumferential direction of the disk print medium; and
a friction member being in contact with the rotary table to apply a frictional load to the rotation.

8. A thermal printing apparatus comprising:
a thermal head for thermal printing in a main scanning direction along a width of a rectangular print medium having a heat-sensitive coloring layer;
head pressing means for pressing the thermal head toward the rectangular print medium;
a movable table for supporting the rectangular print medium and for moving the rectangular print medium in a sub scanning direction perpendicular to the main scanning direction; and
a friction member being in contact with the movable table to apply a frictional load to the rectilinear movement.

9. The thermal printing apparatus of claim 7 or 8, wherein the friction member is disposed so as to oppose the pressure by the head.
